# EUROPEAN PATENT SPECIFICATION

(11) **EP 3 641 557 B1**
(45) Date of publication and mention of the grant of the patent: **09.10.2024**
(21) Application number: 18821674.1
(22) Date of filing: 20.06.2018
(51) Int. Cl.: A23J 1/00, A23J 1/12, A23J 1/16

(54) **REDUCTION OF FUMONISIN IN CORN PROTEIN PRODUCTS**
REDUKTION VON FUMONISIN IN MAISPROTEINPRODUKTEN
RÉDUCTION DE FUMONISINE DANS DES PRODUITS DE PROTÉINE DE MAÏS

(30) Priority: 23.06.2017 US 201762523914 P
(43) Date of publication of application: 29.04.2020
(73) Proprietor: Cargill, Incorporated, Wayzata, MN 55391 (US)
(72) Inventor: BIANCHINI, Andreia, Lincoln Nebraska 68588 (US); MCCONVILLE, Erika Lyn, Minneaplis Minnesota 55408 (US); PORTER, Michael A., Maple Grove Minnesota 55369 (US)
(74) Representative: Forresters IP LLP
(86) International application number: PCT/US2018/038541
(87) International publication number: WO 2018/237030

(56) References cited:
- WO-A1-2017/058501
- WO-A2-2017/040273
- US-A1- 2001 009 040
- US-A1- 2005 074 538
- US-A1- 2008 102 502
- US-A1- 2009 053 368
- MARY A. DOMBRINK-KURTZMAN ET AL: "Effect of Nixtamalization (Alkaline Cooking) on Fumonisin-Contaminated Corn for Production of Masa and Tortillas", JOURNAL OF AGRICULTURAL AND FOOD CHEMISTRY, vol. 48, no. 11, 1 November 2000 (2000-11-01), US, pages 5781 - 5786, XP055564817, ISSN: 0021-8561, DOI: 10.1021/jf000529f
- BURNS T D ET AL: "Fumonisin concentrations and in vivo toxicity of nixtamalized Fusarium verticillioides culture material: Evidence for fumonisin-matrix interactions", FOOD AND CHEMICAL TOXICOLOGY, PERGAMON, GB, vol. 46, no. 8, 1 August 2008 (2008-08-01), pages 2841 - 2848, XP022939030, ISSN: 0278-6915, [retrieved on 20080529], DOI: 10.1016/J.FCT.2008.05.017
- DOMBRINK-KURTZMAN ET AL.: "Effect of Nixtamalization (Alkaline Cooking) on Fumonisin-Contaminated Corn for Production of Masa and Tortillas", J. AGRIC. FOOD CHEM, vol. 48, no. 11, November 2000 (2000-11-01), pages 5781 - 5786, XP055564817

## Description

### TECHNICAL FIELD

This disclosure relates to corn protein products and a method for reducing fumonisin that may be contained therein.

### BACKGROUND

For corn protein to be commercially viable as a food ingredient, the product must be consistently safe for consumers to eat. Some sources of risk are the consequences of conditions applied during the growth, harvest or storage of the corn; the issue precedes corn processing. Mycotoxins are a category of compounds that are typically produced by fungi growing on the corn plants or grain. An example of a mycotoxin is fumonisin. Disclosed herein is a method of reducing fumonisin in corn protein products.

Dombrink-Kurtzman et al., J Agricultural and Food Chemistry, v 48, no 11, pp 5781-5786, 2000 and Burns et al, Food and Chemical Toxicology, v 46, no 8, pp 2841-2848, 2008 disclose nixtamalization of corn grain material using calcium hydroxide. WO 2017 /058501 A1 discloses a method for the reduction of aflatoxin using a sequestering agent.

### SUMMARY

The invention is defined in the claims. Described herein is as method of reducing fumonisin in a corn protein product, comprising adjusting the pH of the corn protein product to a range between about 5.75 and about 7.5 to reduce fumonisin by at least 70%. The method further comprises the addition of a divalent cationic salt. According to the present invention, said method of reducing fumonisin in a corn protein product in a slurry form comprises adding a base to the corn protein product, to adjust the pH of the corn protein product to a range between 5.75 and 7.5, to reduce fumonsin by at least 70%, and further comprising adding a divalent cationic salt in combination with the pH adjustment step.

### FIGURES

Figure 1 shows response of fumonisin to pH modification after cake washing and after subsequent EtOH extraction.
Figure 2 shows the time required to form the initial cake as a function of pH.
Figure 3 shows the drainage rate of rinse water through a settled bed formed from Empyreal^{®} adjusted to different pH values with NaOH.
Figure 4 shows the effect of slurry pH on residual fumonisin concentration.
Figure 5 shows the effect of 2.5% CaCl₂ on the drainage rate as a function of pH.
Figure 6 shows the effects of NaCl and (NH)₂SO₄ on the drainage rate as a function of pH.
Figures 7A and 7B shows the effect of CaCl₂ and MgCl₂ dosage on cake drainage rates at pH 7.0.
Figure 8 shows the effect of added divalent metal salts on the amount of NaOH required to achieve a pH of 7.0.
Figure 9 shows the effect CaCl₂ addition alone has on residual fumonisin.
Figure 10 shows the combined effect of pH and CaCl₂ modification on residual fumonisin.
Figure 11 shows the effect of pH adjustment with Ca(OH)₂ on drainage rate compared to NaOH.
Figure 12 shows residual fumonisin concentrations after treatment at various pH values with Ca(OH)₂.
Figure 13 shows the response of fumonisin removal to pH and [Ca] on of an Empyreal^{®} suspension (residual concentration is color coded such that white is low and dark grey is high).

### DETAILED DESCRIPTION

Described herein is a method of reducing fumonisin in corn protein products by adjusting pH to desired levels and adding a divalent cationic salt. According to the invention, said method of reducing fumonisin in a corn protein product in a slurry form comprises adding a base to the corn protein product, to adjust the pH of the corn protein product to a range between 5.75 and 7.5, to reduce fumonsin by at least 70%, and further comprising adding a divalent cationic salt in combination with the pH adjustment step.

Fumonisin contamination affects the quality and safety for human and animal consumption, which can lead to economic losses to corn growers and corn processers during years with corn crops have high levels fumonisin. For safe human consumption, fumonisin levels should be below a designated threshold. This threshold was estimated to be about two micrograms per kg body weight per day by JEFCA (Joint FAO/WHO Expert Committee on food Additives). This threshold is used by government agencies, such as the US Food and Drug Administration, as guidance to set national standards. U.S. FDA recommended maximum levels are 2-4ppm in common corn-based ingredients for human food. Aspects herein describe a method of reducing fumonisin in corn protein products to a level less than 2 ppm and in preferred aspects less than 1.5 ppm, which are below most food regulations.

Corn gluten materials may comprise levels of fumonisin too high for human and/or animal consumption. Corn gluten materials, during a poor performing crop year, typically comprise fumonisin levels between 4 and 6 ppm (too high for consumption). Such corn gluten materials can be starched or destarched. In some aspects, the corn gluten material may be for example corn gluten meal or a corn protein concentrate having protein levels of at least 55 wt%, such as that described in U.S. Patent No. 9,226,515. A typical analysis of such corn protein concentrate (e.g., Empyreal^{®} 75, Cargill, Incorporated, Wayzata, MN) comprises about 75% to 80% protein.

The processing methods described herein are carried out on a slurry form of the corn protein product and before the ethanol extraction process typical in further extracting corn protein. One skilled in the art would recognize that the slurry could be more dilute or more concentrated which would have an impact on capital or operating costs. Typical production slurry solids concentrations range between about 10 wt% and about 20 wt% and more typically are near about 14 wt% and 15 wt%.

Aspects of the present invention describe a method of adjusting the pH to corn protein materials to a range between about 5.75 and about 7.5. Adjusting the pH to this range shows a significant reduction in fumonisin.

In some aspects, the pH is adjusted to ranges between about 6.25 to about 7.5. In some aspects, the pH is adjusted to ranges between about 6.25 to about 7.25. In some aspects, the pH is adjusted to ranges between about 6.5 to about 7.25. In some aspects, the pH is adjusted to ranges between about 6.75 to about 7. In some aspects, the pH is adjusted to ranges between about 6.5 to about 7.25. In some aspects, the pH is adjusted to ranges between about 6.75 to about 7.

According to the invention, when pH adjustment is coupled with the addition of a divalent cationic salt, the pH is adjusted to ranges between about 5.75 to about 7.5. In some aspects, the pH is adjusted to ranges between about 6.0 to about 7.25. In some aspects, the pH is adjusted to ranges between about 6.25 to about 7.25. In some aspects, the pH is adjusted to ranges between about 6.5 to about 7.25. In some aspects, the pH is adjusted to ranges between about 6.75 to about 7.

Most corn protein materials have an "as-is" acidic pH, accordingly strong bases known in the art, for example sodium hydroxide, potassium hydroxide, and calcium hydroxide, can be used to raise the pH to the ranges described above. It shall be understood the base is added in an amount sufficient to adjust the pH within the desired range as described above.

Many proteins, for example those contained in corn protein products, have a minimal surface charge at a pH in the 4-5 range. One consequence of this is that potentially ionizable groups are in the form of protonated acids. Without being bound to any particularly theory, it is believed raising the pH can replace these protons with ions (like Na) which change the surface charge of the protein giving it different affinity for potential binding compounds (like fumonisin). An elevated pH may also cause the fumonisin to deprotonate, which should increase solubility and permit charge repulsion to enhance extractability. It is believed to take between about 30 seconds and up to 5 minutes after the pH adjustment to complete this proton exchange and diffusion.

Water removal from the slurry can be accomplished using any method of solid-liquid separation, such as drum filtration, centrifugation, etc. Typical industrial corn processing utilizes drum filtration where drainage rate is an important parameter. Adjusting the pH to the levels described may negatively impact water drainage rates of the corn protein material during processing. Accordingly, it is surprising that when the pH is adjusted in combination with the addition of a water soluble divalent cationic salt that at least 80% of the drainage rate typically seen during normal corn processing is maintained. In some aspects the divalent cation is magnesium. In preferred aspects the divalent cation is calcium. To maintain at least 80% of the drainage rate typically seen during normal corn processing, the divalent cationic salt can be added in amounts ranging between about 0.01 M and 0.03 M, more preferably between about 0.01 M and 0.03 M, and in preferred aspects in an amount around 0.015 M. In other aspects, the divalent cationic salt can be added in amounts ranging from about 0.2 to about 1 wt% on a slurry basis. In other aspects, the divalent cationic salt can be added in amounts ranging from 0.1 mmol/g solids to 0.2 mmol/g solids. Higher concentrations of the divalent cationic salt can be used, but are not preferred.

Following this method, reduces fumonisin levels in a corn protein product at least by about 70%, more preferably at least by about 80%, and even more preferably at least by about 90%. Final fumonisin levels are targeted to amounts less than about 2 ppm. In preferred aspects, the fumonisin level is reduced to amounts less than about 1.5 ppm, less than about 1.25 ppm, less than about 1.0 ppm, less than about 0.9 ppm, less than about 0.8 ppm, less than about 0.7 ppm, less than about 0.6 ppm, less than about 0.5 ppm, less than about 0.4 ppm, less than about 0.3 ppm, less than about 0.2 ppm.

### EXAMPLES

The following examples are presented to illustrate the present invention and to assist one of ordinary skill in making and using the same.

### Example 1

This example focuses on modifying an Empyreal^{®} slurry prior to cake formation with a focus on fumonisin removal from the cake itself (without subsequent EtOH extraction). Slurries of Empyreal^{®} were treated by adjusting pH and increasing ionic strength. Cakes were formed with the slurries, then rinsed with one bed volume of DI water, dried, and ground before sending to Trilogy Analytical Laboratory (Washington MO) for mycotoxin testing. The laboratory used AOAC #2001.04 with modifications for analysis of fumonisin. In all cases, the sum of fumonisin B1, fumonisin B2, and fumonisin B3 is used to describe fumonisin concentration. The limit of detection for each component is 0.1 ppm.

To ensure measurable fumonisin levels, Empyreal^{®} known to contain a high quantity of fumonisin was obtained and stored in a freezer and/or refrigerator. Samples were prepared by weighing 50g wet Empyreal^{®} cake containing approximately 60% moisture in a 250mL Nalgene^{®} bottle. The slurry water was prepared by weighing the additive(s), 1M sodium hydroxide and calcium chloride in a plastic beaker (per Table 1), filling the beaker to 150g with DI water, and stirring until well mixed or dissolved. The treatment solution was added to the Empyreal^{®} and homogenized using a handheld mixer. The slurry was left on the benchtop for 5 minutes to equilibrate.

**Table 1. Target Conditions and Preparation**

| Slurry Target Condition | | Treated Water Prep | | |
|---|---|---|---|---|
| pH | CaCl₂ | 1M NaOH, g | CaCl₂, g | Total Wt, g |
| As is | 0 | 0 | 0 | 150 |
| 6.5 | 0 | 1.54 | 0 | 150 |
| 7.5 | 0 | 2.31 | 0 | 150 |
| 8.5 | 0 | 3.08 | 0 | 150 |
| 6.5 | 0.5% | 1.54 | 1.0 | 150 |
| 7.5 | 0.5% | 2.31 | 1.0 | 150 |
| 8.5 | 0.5% | 3.08 | 1.0 | 150 |
| 6.5 | 1.0% | 1.54 | 2.0 | 150 |
| 7.5 | 1.0% | 2.31 | 2.0 | 150 |
| 8.5 | 1.0% | 3.08 | 2.0 | 150 |

The slurry was then filtered using a 15cm Buchner funnel and filter paper under vacuum to create a cake with 3.5mm depth. Just as the cake was starting to dry, one bed volume (60g) of DI water was poured on top of the cake to rinse. The cake continued to dry under vacuum until well cracked. Each cake was transferred to a shallow tin. Approximately 1g sample was transferred to a 15mL plastic tube for pH testing and the remaining sample placed in a vacuum oven set to 70°C to dry. The 1g portion was re-suspended in DI water and a pH measurement recorded. The following day, the dry cakes were removed from the oven, ground, and sent to Trilogy for fumonisin testing.

The Empyreal^{®} slurries did not reach the expected pH levels, however there was a measurable reduction in the fumonisin levels in response to pH modification alone (see Table 2).

**Table 2. pH and Fumonisin Results**

| Slurry Target Condition | | Results | |
|---|---|---|---|
| pH | CaCl₂ | Measured pH | Total Fumonisin, ppm |
| As is | 0 | 4.9 | 4.4 |
| 6.5 | 0 | 5.8 | 2.1 |
| 7.5 | 0 | 6.7 | 0.6 |
| 8.5 | 0 | 7.6 | 0.7 |
| 6.5 | 0.5% | 5.4 | 0.9 |
| 7.5 | 0.5% | 5.6 | 1.5 |
| 8.5 | 0.5% | 6.1 | <0.1 |
| 6.5 | 1.0% | 5.4 | <0.1 |
| 7.5 | 1.0% | 5.6 | 1 |
| 8.5 | 1.0% | 5.7 | 1.2 |

When pH was higher than 7.5, drainage rates were not particularly desirable, however. No measurements were taken, but the time difference was quite perceptible when pH was the only modification. Samples that also contained CaCl₂ seemed to drain more quickly than their equivalents lacking Ca.

### Reference Example 2

As discussed in Example 1, pH increases are associated with increased fumonisin removal. To provide a clearer picture of the role pH has in fumonisin removal, an example was conducted by preparing Empyreal^{®} slurries, in duplicate, from pH 5.75 to 7.5 at quarter pH unit increments. To ensure adequate cake rinsing, the formed cake was rinsed twice with one bed volume of DI water (60g each time). The duplicate rinsed cakes were prepared to enable a large sample to be split for either analysis or further treatment before analysis. So the duplicate cakes were combined, thoroughly mixed and then split into two equal portions. One portion was retained as "before" and the other extracted in absolute ethanol to form a "final" sample. Both portions were dried and sent out for fumonisin testing.

Samples were prepared, in duplicate, by weighing 50g wet Empyreal^{®} cake containing approximately 60% moisture in a 250mL Nalgene^{®} bottle. 140g DI water was added to the bottle and the mixture homogenized using a handheld mixer. The bottle was then tared on an analytical balance and adjusted to desired pH (Table 3) using a 1M sodium hydroxide solution. The bottle was placed back on the balance, the weight of NaOH consumed was recorded, the bottle was filled to 200g total with DI water, and inverted to mix. The pH adjusted slurry was allowed to sit for at least 5 minutes, then collected on a 150mm Buchner funnel using Whatman #40 filter paper under vacuum. When the cake surface was starting to dry, 60g DI water was poured on top of the cake and allowed to drain until the surface was starting to dry. Another 60g DI water was poured on top and the cake continued under vacuum until well cracked. The individual cakes were transferred to shallow trays and duplicate cake preparations combined until well mixed. Combined cakes were split in half. The first half was placed in a vacuum oven set to 60-70°C and left overnight, these samples were labeled "As is." The other half was placed, open, in the refrigerator overnight.

**Table 3. Preparation Weights and Target pH Values**

| Target for Slurry | Prep | |
|---|---|---|
| Target pH | 1M NaOH Added, g | Measured pH |
| As is | 0 | 5.01 |
| 5.75 | 0.58 | 5.77 |
| 6.0 | 1.38 | 5.99 |
| 6.25 | 1.95 | 6.27 |
| 6.5 | 2.27 | 6.49 |
| 6.75 | 2.65 | 6.77 |
| 7.0 | 2.98 | 7.02 |
| 7.25 | 3.35 | 7.27 |
| 7.5 | 3.63 | 7.49 |

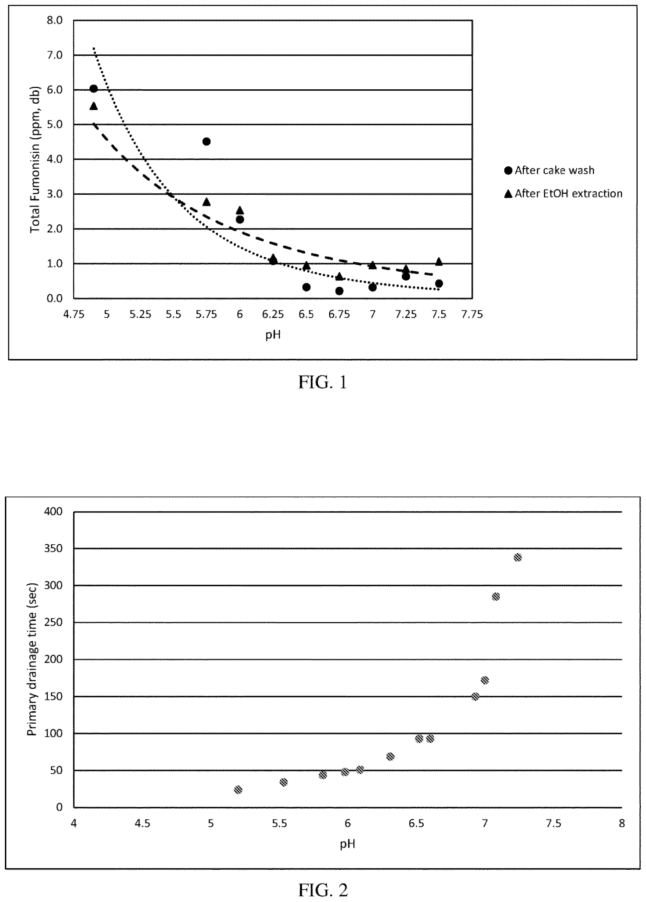

The next morning, the retained cakes were removed from the refrigerator and allowed to come to room temperature. A loss on drying (LOD) value was measured using a moisture balance and the cake transferred to a 250mL Nalgene^{®} bottle. DI water was added to each bottle (as necessary) to achieve 40% moisture in the sample. Samples were then extracted with 100g absolute ethanol (targeting a final ethanol concentration of 90%), homogenizing with a handheld mixer and allowing to stand for at least 15 minutes. The slurries were filtered on a 150mm Buchner funnel using Whatman # 40 paper to form a cake. The cakes were re-suspended in 100g absolute EtOH, left to stand for 30 minutes, and filtered again on the Buchner funnel with filter paper. Extracted cakes were transferred to large plastic weigh boats and left to dry at room temperature. Fumonisin concentration decreased as cake pH increased (see Table 4, Figure 1). Furthermore, Table 4 demonstrates that subsequent ethanol extraction does not further reduce fumonisin levels.

**Table 4: Response of Fumonisin (total ppm on a dry basis) to pH modification after cake washing before and after EtOH extraction.**

| pH | Before EtOH extraction | After EtOH extraction |
|---|---|---|
| 4.9 | 6.0 | 5.5 |
| 5.75 | 4.5 | 2.8 |
| 6.0 | 2.3 | 2.5 |
| 6.25 | 1.1 | 1.2 |
| 6.5 | 0.3 | 1.0 |
| 6.75 | 0.2 | 0.6 |
| 7.0 | 0.3 | 1.0 |
| 7.25 | 0.6 | 0.9 |
| 7.5 | 0.4 | 1.1 |

Subsequent extraction did not result in a significant change in the fumonisin concentration (Table 4, Figure 1).

The slowing effect of higher pH on cake drainage was observed again but results reinforced the idea that higher pH treatments are desirable for fumonisin removal had negative handling characteristics.

### Reference Example 3

To understand the effect of slurry pH on the rate of cake settling and subsequent draining, an example was set up to measure drainage rates at differing pHs, and measure the residual fumonisin concentration.

Samples were prepared by weighing 50g wet Empyreal^{®} cake containing approximately 60% moisture in a 250mL Nalgene^{®} bottle. Another 250mL Nalgene^{®} bottle was tared and the desired amount of 1M NaOH was weighed into the bottle. Water was added to a total weight of 150g. The diluted NaOH solution was added to the pre-weighed Empyreal^{®} and inverted to mix. The mixture was homogenized with the handheld homogenizer, the pH was recorded and the sample was allowed to sit for at least 5 minutes. With the filter in place and the vacuum hose attached and the pump off, the slurry was poured onto the filter (150mm Buchner funnel using Whatman #40 filter paper). The vacuum pump was turned on and a timer was started. When the free water disappeared from the surface, the timer was stopped and the vacuum disconnected. The time to form the cake was recorded as the primary drainage time. The funnel was lifted off and the recovered liquid was measured. The funnel was returned to its place on the vacuum flask, any cracks in the cake were sealed by rubbing the surface with a wet fingertip, and 60g of water was poured onto the surface. The vacuum pump was re-started and the timer was restarted. The time when the free water disappeared from the surface was recorded but the draining was continued until the surface was cracked or drainage was essentially stopped. The cake was transferred to a shallow Al pan and dried in the vacuum oven overnight at about 80C under vacuum. The dried cakes were coarsely ground and sent to Trilogy for analysis.

The slurry pH had a strong effect on both the primary cake drainage (Table 5) and the subsequent drainage through the established cake (secondary drainage). There was no apparent effect of pH on the amount of solution drained during initial cake formation (the primary drainage volume).

**Table 5. The effect of slurry pH on drainage rates and volume. Missing data is marked "xxxx".**

| Slurry Preparation | | | Drainage metrics | | | | |
|---|---|---|---|---|---|---|---|
| 1M NaOH, (g) | Total Wt (g) | Measured pH | primary drainage time (s) | Secondary drainage time (sec) | prime volume (mL) | Secondary rate (L/m2/sec) | Fumonisin (ppm) db |
| 0 | 150 | 5.2 | 24 | 27 | 130 | 0.13 | 4.1 |
| 1.54 | 150 | 6.31 | 69 | 75 | 131 | 0.05 | 1.4 |
| 2.43 | 150 | 7 | 172 | 218 | 124 | 0.02 | 0.5 |
| 2.85 | 150 | 7.24 | 338 | 427 | 120 | 0.01 | 0.8 |
| 0 | 150 | 5.2 | 24 | 31 | 118 | 0.11 | 3.0 |
| 1.41 | 150 | 6.09 | 51 | 64 | 126 | 0.05 | 1.6 |
| 1.99 | 150 | 6.52 | 93 | 116 | 130 | 0.03 | 0.8 |
| 0.53 | 150 | 5.53 | 34 | 43 | 122 | 0.08 | 2.3 |
| 2.55 | 150 | 7.08 | 285 | 406 | 138 | 0.01 | 0.7 |
| 2.00 | 150 | 6.6 | 93 | 122 | 134 | 0.03 | 0.7 |
| 2.25 | 150 | 6.93 | 150 | xxxx | 132 | xxxx | 1.2 |
| 1.03 | 150 | 5.82 | 44 | 50 | 134 | 0.07 | 1.8 |
| 1.21 | 150 | 5.98 | 48 | 60 | xxxx | 0.06 | 3.5 |

Figure 2 shows the time required to form the initial cake as a function of pH. The time required increased with small pH increases with the time slowing significantly above pH 6.5.

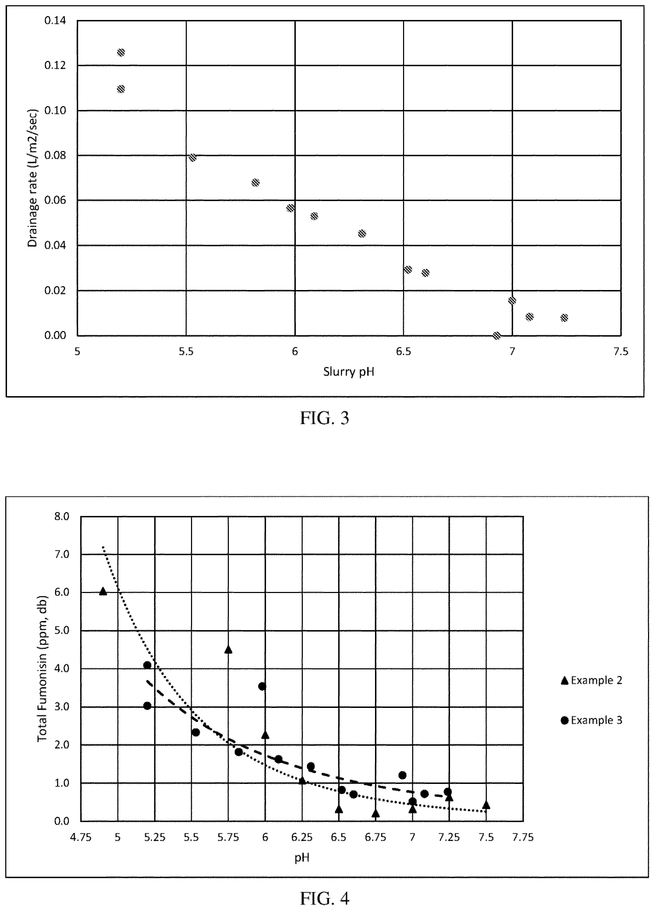

The secondary drainage rate shows a linear decline in drainage rate with pH over the 5 to 7.5 range (Figure 3). The secondary rate is a better indication of the drainage rate because it is dealing with the settled bed, while the initial time combines both the time required to form the bed and the time required to drain the bed.

Data for fumonisin removal as a function of pH from the experiment in Example 2 and this Example 3 is combined in Figure 4. Both experiments show that the removal of fumonisin improved significantly as the pH exceeded 6.5. This presents a significant dilemma. Conditions suitable for maximal removal of fumonisin coincide with the least optimal processing conditions using filtration. As mentioned earlier, it was noted that some CaCl₂ treatments appear to have faster drainage. This possibility was explored in another experiment.

### Example 4

First Experiment: Samples were prepared by weighing 50g wet Empyreal^{®} cake containing approximately 60% moisture in a 250mL Nalgene^{®} bottle. Another 250mL Nalgene^{®} bottle was tared and the desired amount of 1M NaOH was weighed into the bottle (and recorded). In a separate dish, the desired amount of 10 wt% CaCl₂ (or in some experiments 10 wt% (NH₄)₂SO₄ or 20 wt% NaCl) was weighed, then rinsed into the dilute NaOH solution. Water was added to a total weight of 150g. The diluted NaOH solution was added to the pre-weighed Empyreal^{®} and inverted to mix. The mixture was homogenized with the handheld homogenizer, the pH was recorded and the sample was allowed to sit for at least 5 minutes. With the filter in place and the vacuum hose attached and the pump off, the slurry was poured onto the filter (150mm Buchner funnel using Whatman #40 filter paper). The vacuum pump was turned on and a timer was started. When the free water disappeared from the surface, the timer was stopped and the vacuum disconnected. The time to form the cake was recorded as well as the primary drainage time. The funnel was lifted off and the recovered liquid was measured. The funnel was returned to its place on the vacuum flask, any cracks in the cake were sealed by rubbing the surface with a wet fingertip, and 60g of water was poured onto the surface. The vacuum pump was re-started and the timer was restarted. The time when the free water disappeared from the surface was recorded but the draining was continued until the surface was cracked or drainage was essentially stopped. The cake was transferred to a shallow Al pan and dried in the vacuum oven overnight at about 80C under vacuum. The dried cakes were coarsely ground and sent to Trilogy for analysis.

Second Experiment: As will be discussed, the Ca addition altered the system pH, so target pH vales were not achieved. In this round of experimentation, the sample preparation was altered. The Empyreal^{®} was weighed as described in the first experiment. The desired amount of 10 wt% CaCl₂ was weighed into a 250mL Nalgene^{®} bottle and brought to 140g. This solution was mixed with the Empyreal^{®} and shaken. The mixture was adjusted with 1M NaOH to the desired pH, the amount of base consumed and the actual pH was recorded (which equaled the weight change); the total sample weight was brought to 200g and the incubation period begun.

Third Experiment: General methods were as described in the second experiment, except that the final pH was set to 7.0 +/- 0.05.

Fourth Experiment: General methods were as described in the second experiment, except that the final pH was set to 7.0 +/- 0.05 and 10 wt% MgCl₂ was used instead of CaCl₂.

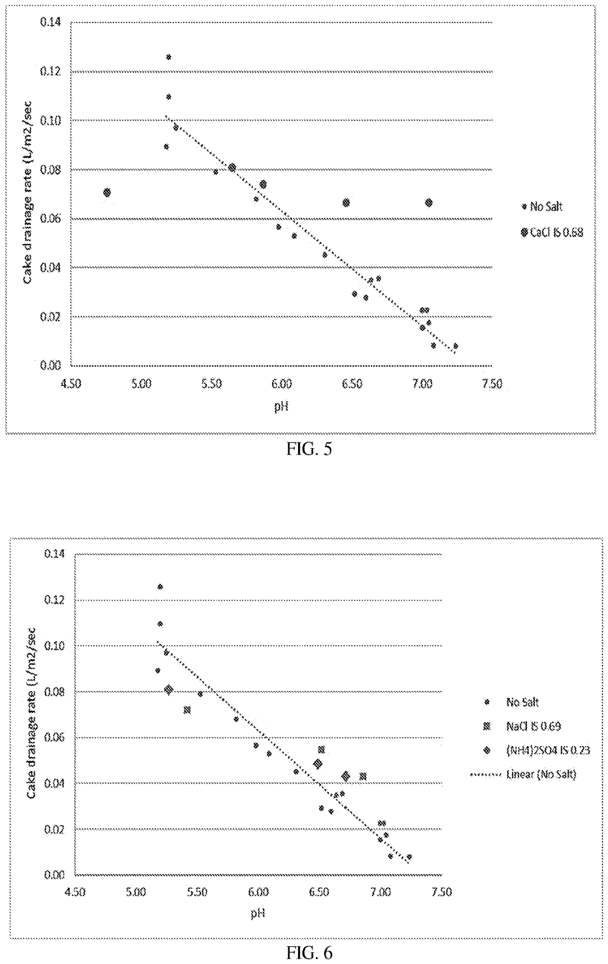

A question answered in the first experiment was how CaCl₂ changed the cake drainage rate. Figure 5 shows that 2.5 wt% CaCl₂ almost eliminated the suppression of drainage induced by NaOH. Lower concentrations of CaCl₂ had similar effects (data not shown). To determine if the effect was purely due to ionic strength, NaCl (4 wt%) and (NH₄)₂SO₄ (1 wt%) were added to suspensions, but these additions had little or no effect on drainage rate (Figure 5). Taken together, Ca seems to have a specific effect on drainage rate. The Ca-containing suspensions had slightly slower drainage than the unmodified control suspensions for reasons that are not clear, but may reflect a Ca-induced tightening of particles.

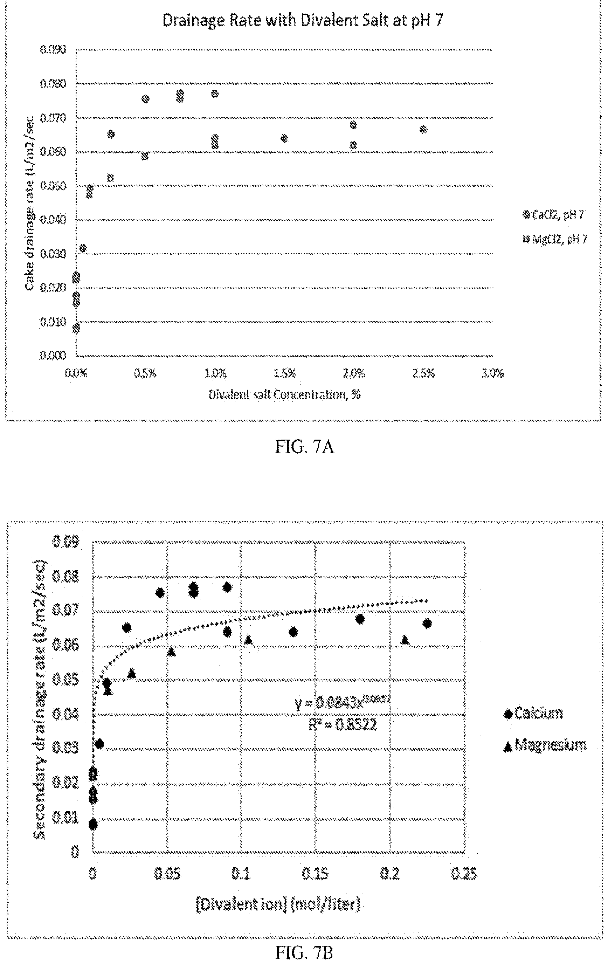

A further test was done to determine the dose-response effect of Ca on drainage rate at pH 7.0. This pH was chosen because it is well within the zone of expected low residual fumonisin concentrations, potentially desired final product pH and bad drainage performance. Figure 7 shows that the transition from high drainage conditions to low drainage conditions is fairly sharp and occurs between 0.05% and 0.25%. The data suggests that a slurry suspension containing more than about 25 mM CaCl₂ would have drainage near that of a cake created at the as-is pH.

In contrast to NaCl and (NH₄)₂SO₄, the response of drainage rate to MgCl₂ was similar to that induced by CaCl₂ (Figure 7).

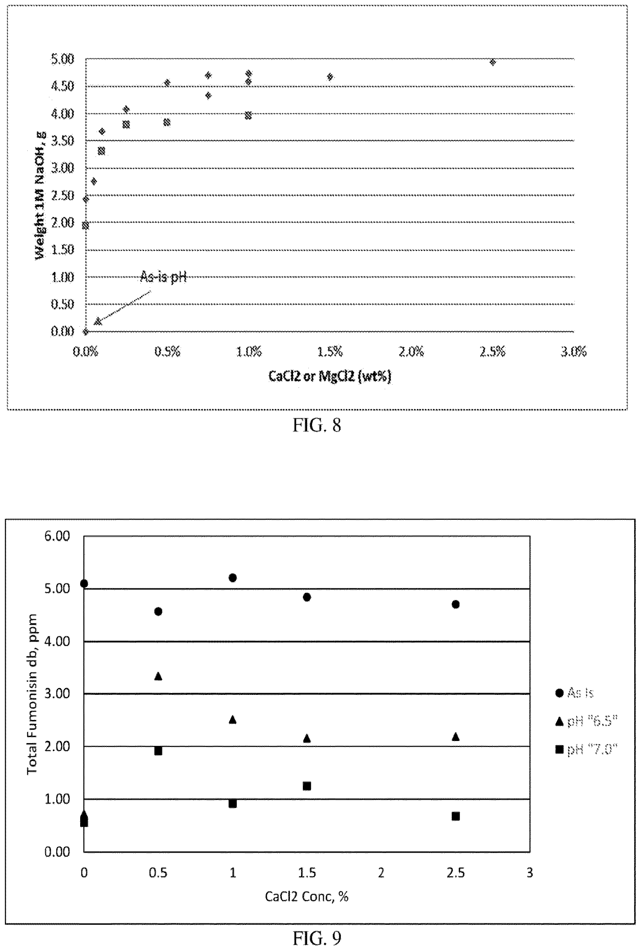

One unexpected outcome from the first attempt to examine the effect of pH on drainage rates was that suspension pH did not reach the value expected based on salt-free addition. In other words, Ca lowered the pH of Empyreal^{®} solutions - even though the pH of the CaCl₂ solution was itself 7.4. In the experiments where differing amounts of Ca and Mg chlorides were added to Empyreal and then the pH was adjusted to a fixed target of 7.0, the amount of NaOH required was recorded. Figure 8 shows that the significant increase in the required NaOH induced by addition of CaCl₂. Moving the pH of the protein suspension in the absence of Ca required about 2g of 1M NaOH (per 50g Empyreal^{®} cake or about 19.5g dry weight). Addition of 0.5 wt% CaCl₂ created a need for about another 2g of NaOH solution. Superficially, the shape of the NaOH-requirement curve is similar to the curve of the effect of CaCl₂ on drainage rate. MgCl₂ followed a similar pattern to CaCl₂ in its effect on pH change (Figure 8). This is consistent with the idea that Ca or Mg ions are displacing protons from the protein carboxylates which in turn must be neutralized. There was no effect of Na or NH₄ ions on the pH when NaCl or (NH₄)₂SO₄ were used to modify suspensions (data not shown).

On the basis of the results, it was expected that CaCl₂ alone might have a beneficial effect on residual fumonisin concentrations and provide an option for avoiding pH modification. An element of the experiment designed to test the effect of CaCl₂ on drainage rate was to examine the effect of CaCl₂ on the residual fumonisin. In this experiment, three pH levels; as is, pH 6.5 and pH 7.0, were targeted. It was in this experiment that it was confirmed that the pH was being modified, so the targeting of pH failed. On direct examination, the results show that the CaCl₂ addition alone had little or no beneficial effect on residual fumonisin (Figure 9).

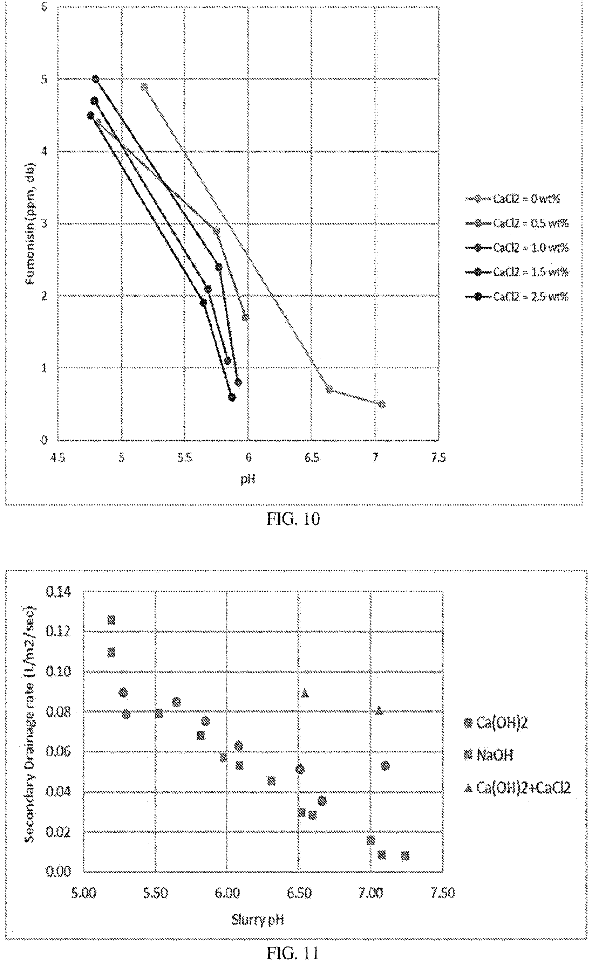

However, when the results are plotted while accounting for the varying pH (Figure 10), an effect of CaCl₂ becomes apparent. As CaCl₂ increased, the pH also declined at which significant fumonisin declines were observed. In other words, it is important to increase the pH in the system and CaCl₂ decreases the amount of pH increase that is required.

### Example 5

While NaOH is common and simple base to use, it does increase the sodium content of the corn protein product; generally sodium minimization is preferred. Calcium hydroxide (Ca(OH)₂) is an alternative base that could be used and would have the potential benefit of improving the drainage rate. An experiment was designed to test this alternative base attempting to achieve a range of pH conditions.

A 10% suspension of Ca(OH)₂ in water was prepared. The solubility limit of Ca(OH)₂ is low, so the suspension was continuously mixed during pH adjustment. A 50g sample of Empyreal^{®} was suspended in about 100g of water (enough to fluidize the solids). The suspension was homogenized to produce a uniform suspension and a known weight of Ca(OH)₂ suspension was added (see Table 6). The pH was measured, and if it was satisfactory the total sample weight was brought to 200g and a timer started (additional Ca(OH)₂ suspension was added if higher pH was desired). After 5 minutes, the drainage rates were recorded. In two samples (pH ~6.5 and ~7.0), CaCl₂ was also added.

Comparison of drainage rates from cakes prepared at different pH values (using Ca(OH)₂). In the second to last row, 1+ is meant to indicate that more than 1g was used but the exact value was unknown.

**Table 6**

| 10% Ca(OH)₂ (g) | 10% CaCl₂ (g) | Measured pH | Primary drainage time (s) | Secondary drainage time (sec) | Secondary rate (L/m2/sec) |
|---|---|---|---|---|---|
| 0 | 0 | 5.28 | 32 | 38 | 0.09 |
| 0.00 | 0 | 5.30 | 35 | 43 | 0.08 |
| 1.06 | 0 | 6.51 | 47 | 66 | 0.05 |
| 1.26 | 0 | 6.66 | 44 | 96 | 0.04 |
| 1.54 | 0 | 7.10 | 42 | 64 | 0.05 |
| 0.74 | 0 | 6.08 | 32 | 54 | 0.06 |
| 0.5 | 0 | 5.85 | 37 | 45 | 0.08 |
| 0.27 | 0 | 5.65 | 34 | 40 | 0.08 |
| 1+ | 20 | 6.54 | 35 | 38 | 0.09 |
| 1.47 | 20 | 7.06 | 33 | 42 | 0.08 |

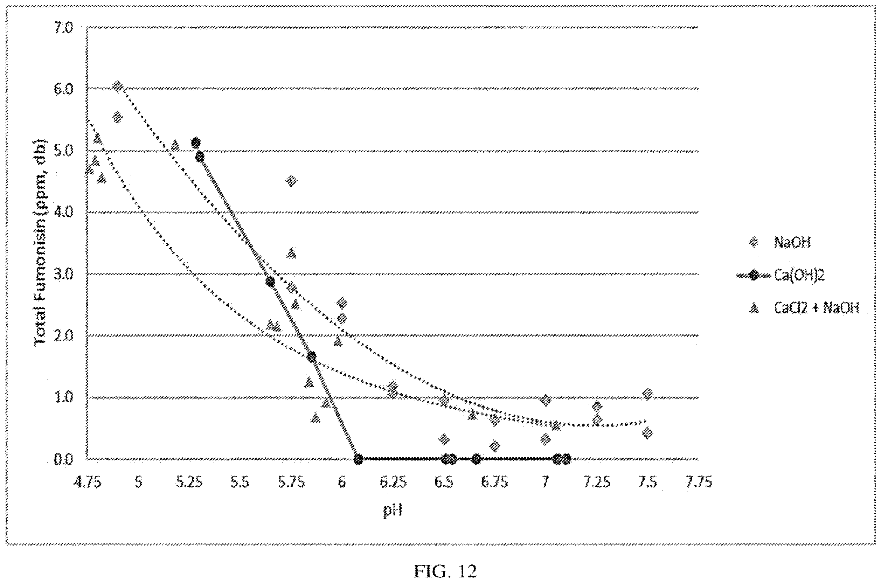

Residual fumonisin decreased with pH as expected (Figure 12), but the effect of calcium from Ca(OH)₂ on the drainage rate was slight or non-existent. Figure 11 shows the drainage based on NaOH addition alone for comparison. Addition of CaCl₂ together with the Ca(OH)₂ restored most of the drainage rate loss. Apparently, the amount of actual intrinsic Ca from Ca(OH)₂ was too low to overcome the effect of pH increase on drainage.

As Figure 11 shows, pH modification with Ca(OH)₂ was very effective at removing fumonisin, with numerous samples having no detectable fumonisin (detection limit 0.1 ppm for individual components). For comparison, the effects of NaOH alone and NaOH in combination with CaCl₂ are shown.

### Example 6

Destarched corn gluten meal slurry was collected from Empyreal^{®} drum "H" and held in a drum filtration feed tank. The tank was agitated with an overhead mixer and the contents of the tank were recirculated during processing. The pH of the tank was increased by addition of 20 wt% NaOH to achieve the pH values between 6.5 and 7.0. The pH as is was estimated to be about 5.9 based on typical analysis of the filtered cake. The pH was measured with a handheld pH probe and 10 wt% NaOH was added to the desired pH. The required amounts of CaCl₂ to achieve desired levels were added as solids and allowed to dissolve using just the dispersion described above. Destarched corn gluten cake was collected on a rotary drum vacuum filter (Manufacturer: Komline-Sanderson, Model: Rotary Drum Vacuum Filter (3' × 1' Pilot Scale Unit)) with rinsing. The destarched slurry was fed to the drum at 1.2 gal/min at a density of about 1.016 g/mL. The rinse water supplemented with active hydrogen peroxide at a concentration of 0.3% w/w was applied at 0.12 gal/min (Wash ratio = 1/10). Upon completion of the vacuum dewatering, the treated cake was frozen until use.

Corn protein isolate was prepared using the methods of WO/2016/154441. Samples of the final product with protein greater than 85% (dry basis) were analyzed at Trilogy Labs for fumonisin and reported in ppm total fumonisin.

To illustrate the effect of the process, samples of corn protein isolate prepared before fumonisin concentrations in the corn crop (2015CY) are compared to samples produced with no modification (2016CY), with pH adjustment alone (2016CY+pH) and with pH adjustment plus Ca (2016CY+pH+Ca) in Table 7. Products made from the 2015 corn crop were generally acceptable for use in a wide range of food situations, and pH adjustment alone was sufficient to restore that level of usefulness. Addition of Ca increased fumonisin removal further, expanding the use levels that could be allowed. The mean total fumonisin concentration of corn protein isolate samples prepared using destarched corn gluten meal prepared from two crop years (harvested 2015 and 2016) and in which two treatments (pH treatment and pH+CaCl₂ treatment, respectively) were applied to materials from the 2016 crop. Treatments in the same group cannot be distinguished with p = 0.05. N indicates the number of corn protein samples produced under that condition.

**Table 7**

| Factor | N | Fumonisin amounts (Mean) (ppm) | Grouping |
|---|---|---|---|
| 2016CY | 73 | 5.4 | A |
| 2016CY+pH | 14 | 2.4 | B |
| 2015CY | 44 | 2.1 | B |
| 2016CY+pH+Ca | 19 | 1.0 | C |

### Example 7

Fifty gram samples of frozen Empyreal^{®} (60% moisture) were weighed into 250mL Nalgene bottles. The desired amount of 10% CaCl₂ solution was weighed out (Table 8) and water was added to a total weight of 140g. The samples were allowed to warm and then homogenized with a Biohomogenizer. The bottles were then tared and the pH was adjusted with 1M NaOH and reweighed. The bottle was set aside to incubate at RT. The suspension was separated on a 15cm Buchner funnel with VWR 417 paper until the surface began to crack. A rinse comprising 60g of fresh DI water was poured over the surface. Drainage was continued until flow essentially stopped and the cake was recovered and weighed. The combined filtrated was collected and weighed. Both cake and filtrate samples were frozen and then freeze dried.

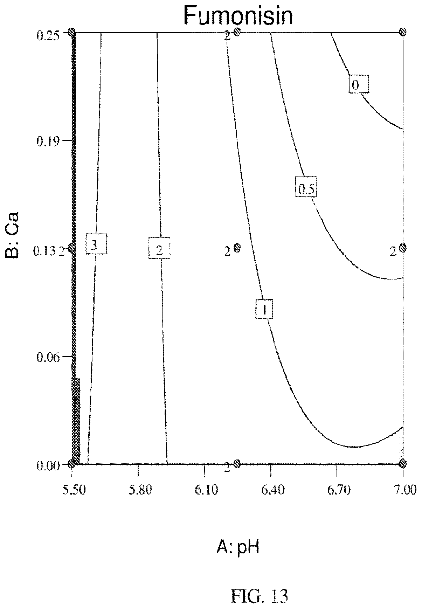

A surface response design was prepared to test the effects of pH and Ca at three levels. The design has replicates distributed throughout and is shown in Table 8. Results of this example are illustrated in Figure 13.

**Table 8**

| Sample | pH | CaCl2 (wt%) | 10 wt% CaCl2 (g) |
|---|---|---|---|
| 1 | 5.5 | 0 | 0.0 |
| 2 | 7 | 0 | 0.0 |
| 3 | 5.5 | 0.125 | 2.5 |
| 4 | 6.25 | 0.25 | 5.0 |
| 5 | 5.5 | 0.25 | 5.0 |
| 6 | 7 | 0.25 | 5.0 |
| 7 | 7 | 0.125 | 2.5 |
| 8 | 6.25 | 0.125 | 2.5 |
| 9 | 6.25 | 0.125 | 2.5 |
| 10 | 6.25 | 0 | 0.0 |
| 11 | 5.5 | 0.125 | 2.5 |
| 12 | 7 | 0.125 | 2.5 |
| 13 | 6.25 | 0 | 0.0 |
| 14 | 6.25 | 0.25 | 5.0 |

## Claims

1. A method of reducing fumonisin in a corn protein product in a slurry form, comprising adding a base to the corn protein product, to adjust the pH of the corn protein product to a range between 5.75 to 7.5, to reduce fumonisin by at least 70%, and further comprising adding a divalent cationic salt in combination with the pH adjustment step.

2. The method of claim 1 wherein the pH is adjusted to a range between 6.25 to 7.5.

3. The method of claim 1 wherein the pH is adjusted to a range between 6.5 to 7.25.

4. The method of claim 1 wherein the pH is adjusted to a range between 6.75 and 7.

5. The method of claim 1 wherein the corn protein product is a corn gluten material.

6. The method of claim 4 wherein the corn protein product is corn protein concentrate.

7. The method of claim 1 wherein the fumonisin is reduced to an amount less than 1.5 ppm.

8. The method of claim 1 wherein the fumonisin is reduced to an amount less than 0.5 ppm.

9. The method of claim 1 wherein the fumonisin is reduced to an amount less than 0.2 ppm.

10. The method of claim 1, wherein the divalent cationic salt is a calcium or magnesium salt.

11. The method of claim 1, wherein the divalent cationic salt is a calcium salt.

12. The method of claim 11 wherein the fumonisin is reduced to an amount less than 1.5 ppm.

13. The method of claim 11 wherein the corn protein product is a corn gluten material.

14. The method of claim 13 wherein the corn protein product is corn protein concentrate.

## Patentansprüche

1. Verfahren zum Reduzieren von Fumonisin in einem Maisproteinprodukt in einer Aufschlämmungsform, umfassend ein Hinzufügen einer Base zu dem Maisproteinprodukt, um den pH-Wert des Maisproteinprodukts auf einen Bereich zwischen 5,75 und 7,5 einzustellen, um Fumonisin um mindestens 70 % zu reduzieren, und ferner umfassend das Hinzufügen eines zweiwertigen kationischen Salzes in Kombination mit dem pH-Wert-Einstellungsschritt.

2. Verfahren nach Anspruch 1, wobei der pH-Wert auf einen Bereich zwischen 6,25 und 7,5 eingestellt wird.

3. Verfahren nach Anspruch 1, wobei der pH-Wert auf einen Bereich zwischen 6,5 und 7,25 eingestellt wird.

4. Verfahren nach Anspruch 1, wobei der pH-Wert auf einen Bereich zwischen 6,75 und 7 eingestellt wird.

5. Verfahren nach Anspruch 1, wobei das Maisproteinprodukt ein Maisglutenmaterial ist.

6. Verfahren nach Anspruch 4, wobei das Maisproteinprodukt Maisproteinkonzentrat ist.

7. Verfahren nach Anspruch 1, wobei das Fumonisin auf eine Menge von weniger als 1,5 ppm reduziert wird.

8. Verfahren nach Anspruch 1, wobei das Fumonisin auf eine Menge von weniger als 0,5 ppm reduziert wird.

9. Verfahren nach Anspruch 1, wobei das Fumonisin auf eine Menge von weniger als 0,2 ppm reduziert wird.

10. Verfahren nach Anspruch 1, wobei das zweiwertige kationische Salz ein Calcium- oder Magnesiumsalz ist.

11. Verfahren nach Anspruch 1, wobei das zweiwertige kationische Salz ein Calciumsalz ist.

12. Verfahren nach Anspruch 11, wobei das Fumonisin auf eine Menge von weniger als 1,5 ppm reduziert wird.

13. Verfahren nach Anspruch 11, wobei das Maisproteinprodukt ein Maisglutenmaterial ist.

14. Verfahren nach Anspruch 13, wobei das Maisproteinprodukt Maisproteinkonzentrat ist.

## Revendications

1. Procédé de réduction de fumonisine dans un produit à base de protéines de maïs sous forme de bouillie, comprenant l'ajout d'une base au produit à base de protéines de maïs, pour ajuster le pH du produit à base de protéines de maïs à une plage comprise entre 5,75 et 7,5, afin de réduire la fumonisine d'au moins 70 %, et comprenant en outre l'ajout d'un sel cationique divalent en combinaison avec l'étape d'ajustement du pH.

2. Procédé selon la revendication 1, dans lequel le pH est ajusté à une plage comprise entre 6,25 et 7,5.

3. Procédé selon la revendication 1, dans lequel le pH est ajusté à une plage comprise entre 6,5 et 7,25.

4. Procédé selon la revendication 1, dans lequel le pH est ajusté à une plage comprise entre 6,75 et 7.

5. Procédé selon la revendication 1, dans lequel le produit à base de protéine de maïs est une matière de gluten de maïs.

6. Procédé selon la revendication 4, dans lequel le produit à base de protéine de maïs est un concentré de protéine de maïs.

7. Procédé selon la revendication 1, dans lequel la fumonisine est réduite à une quantité inférieure à 1,5 ppm.

8. Procédé selon la revendication 1, dans lequel la fumonisine est réduite à une quantité inférieure à 0,5 ppm.

9. Procédé selon la revendication 1, dans lequel la fumonisine est réduite à une quantité inférieure à 0,2 ppm.

10. Procédé selon la revendication 1, dans lequel le sel cationique divalent est un sel de calcium ou de magnésium.

11. Procédé selon la revendication 1, dans lequel le sel cationique divalent est un sel de calcium.

12. Procédé selon la revendication 11, dans lequel la fumonisine est réduite à une quantité inférieure à 1,5 ppm.

13. Procédé selon la revendication 11, dans lequel le produit à base de protéine de maïs est une matière de gluten de maïs.

14. Procédé selon la revendication 13, dans lequel le produit à base de protéine de maïs est un concentré de protéine de maïs.
